# EUROPÄISCHE PATENTSCHRIFT

(11) **EP 2 198 574 B1**
(45) Veröffentlichungstag und Bekanntmachung des Hinweises auf die Patenterteilung: **18.05.2011**
(21) Anmeldenummer: 08803363.4
(22) Anmeldetag: 29.08.2008
(51) Int. Cl.: H04L 12/58, G06F 17/30

(54) **TEILEN VON EMAILS ZWISCHEN ZWEI BENUTZERN MIT HILFE EINES SERVERS**
DIVIDING E-MAILS BETWEEN TWO USERS WITH THE AID OF A SERVER
PARTAGE DE COURRIELS ENTRE DEUX UTILISATEURS AU MOYEN D'UN SERVEUR

(30) Priorität: 20.09.2007 DE 102007044885
(43) Veröffentlichungstag der Anmeldung: 23.06.2010
(73) Patentinhaber: Siemens Enterprise Communications GmbH & Co. KG, 81379 München (DE)
(72) Erfinder: LEDERER, Thomas, 82211 Herrsching (DE)
(74) Vertreter: Fritzsche, Thomas
(86) Internationale Anmeldenummer: PCT/EP2008/061364
(87) Internationale Veröffentlichungsnummer: WO 2009/040210

(56) Entgegenhaltungen:
- US-A1- 2005 010 799
- US-A1- 2005 192 966
- US-A1- 2006 136 419

## Beschreibung

Die Erfindung betrifft ein Verfahren und ein Kommunikationssystem zum Betreiben einer Kommunikationsverbindung zwischen Kommunikationsendeinrichtungen.

Im Arbeitsalltag eines Büroangestellten kommt es häufig vor, dass nach einem vorausgegangenen E-Mail-Schriftwechsel ein sich darauf basierendes Telefonat durchgeführt wird. Bei derartigen Telefonaten hat häufig derjenige, der das Telefonat initiiert hat - im Folgenden als erster Teilnehmer bezeichnet -, eine zuletzt vorausgegangene E-Mail an seinem Rechner derart geöffnet, dass er während dem Telefonat den Inhalt der E-Mail lesen kann und sich verbal auf diese E-Mail beziehen kann.

Bezieht sich nun der erste Teilnehmer auf die ihm vorliegende Email, da er den Inhalt eines Abschnitt der E-Mail diskutieren möchte, so besteht beim Kommunikationspartner - im Folgenden als zweiter Teilnehmer bezeichnet - häufig der Wunsch, ebenfalls die E-Mail betrachten zu können, um besser über den Inhalt diskutieren zu können.

Der zweite Teilnehmer kann nun während dem Telefonat den ersten Teilnehmer bitten, die dem ersten Teilnehmer vorliegende E-Mail an eine E-Mail-Adresse des zweiten Teilnehmers weiterzuleiten.

Geht man davon aus, dass der zweite Teilnehmer ebenfalls an dem vorausgegangenen E-Mail-Schriftwechsel als Autor und/oder als Empfänger beteiligt war, so kann er nun in seinem E-Mail-Postfach oder E-Mail-Archiv nach der gleichen E-Mail suchen. Je nach Struktur und Organisation des E-Mail-Postfachs oder - Archivs, kann sich dies jedoch als schwierig, umständlich und/oder zeitaufwendig darstellen.

US 2005/0010799 A1 offenbart eine Softwareanwendung und eine entsprechende Architektur um die Anwendung durchzuführen, die dynamisch die Zugriffsberechtigungsliste aktualisiert und verfolgt die Verteilung der Routen eines Dokumentes in einer Ablage, wo das Dokument erstellt worden ist und durch die Verwendung eines allgemeinen E-Mail-Systems zugegriffen wird. Die Zugriffsberechtigungsliste und Verteilungs-Routen werden erstellt durch die Empfänger der E-Mail-Nachricht zugeordnet zu dem Dokument. Einige Empfänger können durch die Absender von der Weiterleitung der referenzierten Datenbanken innerhalb des Dokuments per E-Mail deaktiviert werden, während andere weitere Übertragungen auf ausgewählte Personen oder Gruppen bestimmen können.

US 2005/0192966 A1 offenbart einen Zugangsserver, der den sicheren Zugriff erlaubt auf häufig verwendete Dateien auf mehrere Datei-Quellen, die auf einer Vielzahl von Client-Vorrichtungen gespeichert sind. Der Zugangs-Server extrahiert eine Liste der Quellen-Datei die mit dem Benutzer verbunden sind, und greift auf jede dieser Quellen zu. Der Server ist so konfiguriert, dass eine Liste extrahiert wird von den vom aktuellen Benutzer zuletzt verwendeten Dateien sowie von Informationen, die jenen Dateien zugeordnet sind. Der Zugangs-Server verarbeitet auch E-Mail-Anhänge. Der Zugangs-Server fängt E-Mail-Nachrichten ab, die Anlagen enthalten, und überträgt die Anlagen auf einen Datei-Server.

Es ist Aufgabe der Erfindung, dem zweiten Teilnehmer ohne längere Verzögerungen einen Zugriff auf ein Dokument - beispielsweise eine bereits erhaltene Email - zu ermöglichen.

Gelöst wird diese Aufgabe durch ein Verfahren mit Merkmalen gemäß Patentanspruch 1, sowie durch ein Kommunikationssystem mit Merkmalen gemäß Patentanspruch 16.

Vorteilhafte Ausgestaltungen und Weiterbildungen sind darüber hinaus in den abhängigen Ansprüchen angegeben.

Bei dem erfindungsgemäßen Verfahren zum Betreiben einer Kommunikationsverbindung zwischen einer Kommunikationsendeinrichtung und zumindest einer zweiten Kommunikationsendeinrichtung, wobei eine Kopplung zu einem Datenverarbeitungssystem vorgesehen ist, wird für mindestens ein an einer mit der ersten Kommunikationsendeinrichtung interagierenden ersten Rechnereinrichtung geöffnetes erstes Dokument, mindestens eine dem ersten Dokument zugeordnete, jeweils einem Teilnehmer identifizierende erste Adressinformation ermittelt. Darüber hinaus wird eine das erste Dokument identifizierende Dokumenteninformation ermittelt. Weiterhin wird bei Betreiben der Kommunikationsverbindung zwischen der ersten Kommunikationsendeinrichtung und einer zweiten Kommunikationsendeinrichtung die mindestens eine erste Adressinformation mit einer zu einer mit der zweiten Kommunikationsendeinrichtung interagierenden zweiten Rechnereinrichtung zugeordneten zweiten Adressinformation auf Übereinstimmung geprüft. Bei Übereinstimmung der ersten Adressinformation und der zweiten Adressinformation wird daraufhin in einem Dokumentenspeicher der zweiten Rechnereinrichtung mindestens ein zweites Dokument ermittelt, das ebenfalls der Dokumenteninformation zugeordnet ist.

Das Verfahren ist insofern vorteilhaft, als das einem zweiten Teilnehmer ermöglicht wird auf ein Dokument zuzugreifen, das dieselbe Dokumenteninformation hat wie das erste Dokument des ersten Teilnehmers. Vorzugsweise handelt es sich bei dem ersten und dem zweiten Dokument um Kopien desselben Dokuments. Somit besteht für den zweiten Teilnehmer die Möglichkeit auf ein Dokument zuzugreifen, das zumindest inhaltlich aber identisch ist mit dem ersten Dokument.

Nach dem Ermitteln des Dokuments können beliebige Aktionen durchgeführt werden; beispielsweise kann der zweite Teilnehmer das zweite Dokument zum Lesen öffnen oder kann das zweite Dokument manuell oder rechnergesteuert auf irgendeine andere Art und Weise weiterverarbeitet werden.

Bei dem ersten Dokument und somit auch bei dem zweiten Dokument handelt es sich vorzugsweise um eine elektronische Nachricht wie eine E-Mail, um ein beliebiges auf der ersten Rechnereinrichtung abgespeichertes Dokument oder um eine in einem Webbrowser dargestellte Webseite. Die das erste Dokument identifizierende Dokumenteninformation ist dabei vorzugsweise auf den jeweiligen Dokumententyp abgestimmt. Bei einer E-Mail ist es beispielsweise ein Teil des so genannten E-Mail-Headers - die Präambel einer E-Mail mit Informationen bzgl. Absender, Empfänger, Sendezeit und - Datum, Adressen von an einer Übertragung der E-Mail beteiligten Server-Einrichtungen - oder eine eindeutige ID (Identifikationsnummer) in einem Postfach eines E-Mail-Programms. Bei einem beliebigen Dokument im Dateisystem der ersten Rechnereinrichtung ist die Dokumenteninformation vorzugsweise der Dateiname des Dokuments und/oder beliebige Attribute der Datei, wie das Erzeugungsdatum. Bei einer Webseite als erstes Dokument kann die identifizierende Dokumenteninformation vorzugsweise auch eine URL (uniform resource locator) sein.

Bei der ersten bzw. der zweiten Rechnereinrichtung handelt es sich üblicherweise um in Büroumgebungen eingesetzte Arbeitsplatzrechner oder zumindest um Rechnereinrichtungen, die eine Darstellung des ersten bzw. zweiten Dokuments ermöglichen. Bei der ersten Adressinformation handelt es sich vorzugsweise um eine im ersten Dokument enthaltene oder diesem zugeordnete E-Mail-Adresse, die vorzugsweise auch dem ersten Teilnehmer in einer Ausgabe angezeigt wird. Alternativ kann es sich auch um eine Rufnummer, eine IP-Adresse (IP: internet protocol) oder um eine MAC-Adresse (MAC: Media Access Control), die der zweiten Rechnereinrichtung oder der zweiten Kommunikationsendeinrichtung zugeordnet ist.

Bei der Kommunikationsverbindung zwischen der ersten und der zweiten Kommunikationsendeinrichtung handelt es sich vorzugsweise um eine in Echtzeit betriebene Verbindung, insbesondere um eine Verbindung zur Sprachkommunikation, wie eine Telefonverbindung. Bei der ersten und der zweiten Kommunikationsendeinrichtung handelt es sich somit insbesondere um Sprachendgeräte, wie handelsübliche schnurgebundene oder schnurlose Telefone bzw. Mobilfunk-Telefone. Weiterhin kann es sich aber auch um einen so genannten auf einem Arbeitsplatzrechner ablaufenden Softclient handeln, der ebenfalls für eine Sprachkommunikation vorgesehen ist. Darüber hinaus kann es sich aber auch um einen Multimedia-Verbindung in Echtzeit zwischen den zwei Kommunikationseinrichtungen handeln.

Vorzugsweise wird für die Kommunikationsverbindung über ein anderes Kommunikationsmedium betrieben, als eine möglicherweise bestehende Verbindung zwischen der ersten und der zweiten Rechnereinrichtung. Darüber hinaus ist das Verfahren besonders vorteilhaft wenn es sich bei der ersten Kommunikationsendeinrichtung und der ersten Rechnereinrichtung um zwei getrennte Geräte handelt, die üblicherweise nicht direkt miteinander in Verbindung stehen oder auf einen gemeinsamen Speicher zugreifen können. Weiterhin lässt sich das Verfahren besonders vorteilhaft einsetzen in Szenarien, in denen im Rahmen der Kommunikationsverbindung keine Möglichkeit besteht, eine Kopie des ersten Dokuments über die Kommunikationsverbindung zu übertragen.

Unter dem Betreiben einer Kommunikationsverbindung kann vorzugsweise ein Aufbau einer Kommunikationsverbindung, eine sich im Rufzustand befindende oder eine durchgeschaltete Kommunikationsverbindung verstanden werden. In Protokollen werden derartige Zustände häufig als SETUP, ALERT, CONNECT bezeichnet. Weiterhin kann ebenso eine abgewiesene Kommunikationsverbindung aufgrund dessen, dass die zweite Kommunikationsendeinrichtung besetzt ist, als Betreiben einer Kommunikationsverbindung gewertet werden.

Bei dem erfindungsgemäßen Dokumentenspeicher handelt es sich insbesondere um ein E-Mail-Postfach oder um ein E-Mail-Archiv, das auf der zweiten Rechnereinrichtung eingerichtet ist bzw. auf das durch die zweite Rechnereinrichtung zugegriffen werden kann. Darüber hinaus kann es sich bei dem Dokumentenspeicher auch um ein Dateisystem oder um einen Browserzwischenspeicher, häufig auch als Cache bezeichnet, handeln.

In einer vorteilhaften Ausgestaltung des Verfahrens kann dem erfindungsgemäßen Verfahren zeitlich vorauslaufend ein E-Mail-Verkehr zwischen dem ersten Teilnehmer und dem zweiten Teilnehmer stattgefunden haben. Der erste Teilnehmer baut darauf folgend eine Kommunikationsverbindung durch Anruf beim zweiten Teilnehmer zur zweiten Kommunikationsendeinrichtung auf. Nach Durchschalten der Kommunikationsverbindung teilt der erste Teilnehmer dem zweiten Teilnehmer mit, dass er sich für das folgende Telefongespräch auf den Inhalt einer bereits übermittelten E-Mail bezieht. Die E-Mail sei dabei in einem Ausgabe-Fenster der ersten Rechnereinrichtung geöffnet. Das Verfahren erlaubt es nun aus dem geöffneten Fenster für das erste Dokument des E-Mail-Verkehrs enthaltende zweiten Teilnehmer identifizierende erste Adressinformation zu ermitteln, in dem eine aus den Sende- und Absendeadressen des E-Mail-Verkehrs als E-Mail-Adresse des zweiten Teilnehmers erkannt wird. Außerdem wird für die E-Mail ein eindeutiges Kennzeichen ermittelt, beispielsweise aus der Betreffzeile der E-Mail und einem Zeitstempel der E-Mail. Durch das Verfahren wird nun ermittelt, ob es sich bei einem der Sender- oder Empfangsadressen um eine E-Mail-Adresse des zweiten Teilnehmers handelt. Ist dies der Fall, wird die das erste Dokument identifizierende Dokumenteninformation über die Kommunikationsverbindung oder über eine parallel dazu betriebene Datenverbindung an die erste Rechnereinrichtung übermittelt. An dieser wird nun in diesem vorliegenden E-Mail-Postfach nach einer E-Mail gesucht, mit der gleichen Dokumenteninformation, wie sie das erste Dokument besitzt. D.h. es wird nach einer E-Mail gesucht mit derselben Betreffzeile und demselben Zeitstempel, wie vorab ermittelt. Ergibt sich ein Treffer kann nun das ermittelte zweite Dokument dem zweiten Teilnehmer an der zweiten Rechnereinrichtung angezeigt werden. Alternativ kann lediglich ein Link - d.h. eine Zugriffsmöglichkeit in Form einer Verknüpfung, häufig als so genannter Hard-Link oder symbolischer Link umgesetzt - erzeugt werden, der auf das zweite Dokument im Dokumentenspeicher verweist, so dass für den zweiten Teilnehmer die Möglichkeit besteht, auf das zweite Dokument mittels Selektion, beispielsweise Anklicken mit einer Maus als Bedienelement der zweiten Rechnereinrichtung, auf den Link und somit auf das zugeordnete zweite Dokument zuzugreifen. Auf diese Weise besteht die Möglichkeit, dass der zweite Teilnehmer die E-Mail mit demselben Inhalt, wie die an der ersten Rechnereinrichtung dargestellte E-Mail, auch auf der ihm zugeordneten und von ihm bedienten zweiten Rechnereinrichtung angezeigt wird.

Bei dem vorstehend erläuterten Ablauf handelt es sich dabei nur um eine von vielen denkbaren Abläufen. Weitere Ausführungsformen und Abwandelungen sind möglich und werden exemplarisch im Folgenden erläutert.

In einer vorteilhaften Weiterbildung der Erfindung kann die Kommunikationsverbindung eine Konferenzschaltung zwischen mehreren Kommunikationsendeinrichtungen darstellen. Hierbei kann besonders vorteilhaft auch ein E-Mail-Verteiler einer E-Mail als erstes Dokument analysiert werden und für jeden der Teilnehmer des E-Mail-Verkehrs ermittelt werden, ob der untersuchte Teilnehmer auch an der gerade stattfindenden Konferenzschaltung beteiligt ist. Ist dies der Fall kann diesem die ermittelte Dokumenteninformation übermittelt werden und die Überprüfung der Dokumenteninformation auf der jeweiligen Rechnereinrichtung durchgeführt werden. Somit kann ermöglicht werden, dass mehreren Teilnehmern einer Konferenzschaltung die vorab E-Mails ausgetauscht haben, an ihren jeweiligen Rechnereinrichtungen den Inhalt der an der ersten Rechnereinrichtung dargestellten E-Mail ebenfalls angezeigt bekommen können.

Bei einem geöffneten Dokument handelt es sich insbesondere um ein am Bildschirm sichtbares Dokument. Darüber hinaus kann es sich dabei vorzugsweise um dasjenige Dokument handeln, dass im Vordergrund von mehreren geöffneten Fenstern platziert ist. Darüber hinaus kann alternativ oder zusätzlich ausgewertet werden, welches der verschiedenen Fenster einer Mehrfensteroberfläche den Eingabefokus besitzt und ob dieses als aktives geöffnetes Dokument im Sinne des erfindungsgemäßen Verfahrens verwendet werden kann. Darüber hinaus kann bei einem Mehrprozessbetriebssystem, bei dem mehrere Anwendungen gleichzeitig auf der ersten Rechnereinrichtung ablaufen können, eine Beschränkung auf bestimmte konfigurierte Applikationstypen durchgeführt werden, die für die Ermittlung des geöffneten Dokumentes zur Auswahl stehen. Beispielsweise kann eine Beschränkung auf E-Mail-Programme erfolgen. Da üblicherweise lediglich ein einziges E-Mail-Programm von einem Benutzer zu einem gewissen Zeitpunkt verwendet wird, kann ein Inhalt eines Ausgabefensters dieses E-Mail-Programms als aktives geöffnetes Dokument angesehen werden. Die im Hauptfenster des E-Mail-Programms selektierte und evtl. in einem Vorschaufenster dargestellte Nachricht kann dann vorzugsweise als geöffnetes Dokument für den weiteren Verfahrensablauf verwendet werden.

Die Ermittlung der Adressinformation und/oder der Dokumenteninformation kann unabhängig von einer Kommunikationsverbindung zu jedem beliebigen Zeitpunkt durchgeführt werden. Erfolgt dies bereits bei Inaktivität der ersten und der zweiten Kommunikationsendeinrichtung ergibt sich somit der Vorteil, dass bei Rufaufbau der Kommunikationsverbindung die ermittelten Informationen bzgl. Adressinformation und/oder Dokumenteninformation bereits zur Verfügung stehen können. Der Abgleich der ersten mit der zweiten Adressinformation kann dann vorzugsweise zu jedem beliebigen Stadium eines Verbindungsaufbaus bzw. einer durchgeschalteten Verbindung der Kommunikationsverbindung durchgeführt werden. Der Abgleich der Adressinformation kann vorzugsweise derart erfolgen, dass aus dem E-Mail-Verkehr für die E-Mail-Adressen des E-Mail-Verkehrs eine Abfrage bei einem sog. Directory Service erfolgt. Weiterhin kann ein dazu analoger Zugriff auf den Directory Service für die Kommunikationsverbindung und zwar insbesondere für die Rufnummer der zweiten Kommunikationsendeinrichtung des zweiten Teilnehmers erfolgen, so dass für die E-Mail-Adresse des Dokuments sowie für die Rufnummer der zweiten Kommunikationsendeinrichtung erkannt werden kann, ob es sich um denselben Teilnehmer - den zweiten Teilnehmer - handelt. Der Directory Service sei dabei derart ausgestaltet, dass für jeden Teilnehmer ein Datensatz besteht der zumindest eine Rufnummer des Teilnehmers und eine E-Mail-Adresse des Teilnehmers aufweist. Somit kann erkannt werden, ob für beide Abfragen auf den gleichen Datensatz zugegriffen wird. Ist dies der Fall, so handelt es sich bei dem E-Mail-Verkehr und bei der Kommunikationsverbindung um denselben Kommunikationspartner des ersten Teilnehmers, sodass die weiteren Schritte des erfindungsgemäßen Verfahrens weiter ausgeführt werden können.

Die Übermittlung der Dokumenteninformation kann über einen beliebigen Verbindungsweg erfolgen. Vorzugsweise kann es sich dabei um eine Signalisierung oder eine Signalisierungsverbindung der Kommunikationsverbindung handeln. Dies ist beispielsweise ein B-Kanal bei einer ISDN-Verbindung (ISDN: integrated services digital network) bzw. ein entsprechendes Signalisierungspaket einer Sprachkommunikationsverbindung über H.323 bzw. SIP (Session Initiation Protocol), gemäß der Vorgaben der ITU-T bzw. IETF (ITU-T: Standardisierungssektor Telekommunikation der "International Telecommunications Union"; IETF: Internet Engineering Task Force). Alternativ kann die Übermittlung auch über eine Datenverbindung zwischen der ersten Rechnereinrichtung und der zweiten Rechnereinrichtung erfolgen. Hierbei kann auf beliebige Datenprotokolle zurückgegriffen werden. Für eine Übertragung der Dokumenteninformation ist eine Echtzeitanforderung nicht erforderlich, jedoch kann es vorteilhaft sein wenn die Dokumenteninformation zumindest zeitnah übermittelt wird, damit dem zweiten Teilnehmer zu einem frühen Zeitpunkt ein Zugriff auf das zweite Dokument ermöglicht wird.

In einer vorteilhaften Ausgestaltung des Verfahrens kann es sich bei dem ersten Dokument neben einer E-Mail auch um einen Anhang einer E-Mail handeln. Ein Anhang einer E-Mail zeichnet sich dabei dadurch aus, dass es sich um ein eigenständiges Dokument innerhalb einer E-Mail handelt. Als Adressinformation kann dabei weiterhin ein E-Mail-Verteiler der den Anhang umgebenden E-Mail analysiert werden. Für die Ermittlung der Dokumenteninformation dagegen kann vorzugsweise eine Kombination aus Informationen, die der E-Mail zugeordnet sind, und Informationen die dem eingebetteten Anhang zugeordnet sind, ausgewertet werden. Somit kann vorzugsweise erreicht werden, das sofern der erste Teilnehmer eine E-Mail inkl. dessen Anhang geöffnet hat, dem zweiten Teilnehmer die Möglichkeit gewährt wird auch direkt auf diesen Anhang Einsicht zu nehmen.

Weiter vorteilhafte Ausführungsformen und Weiterbildungen sind im Folgenden anhand einer Zeichnung dargestellt und werden anhand dieser näher erläutert.

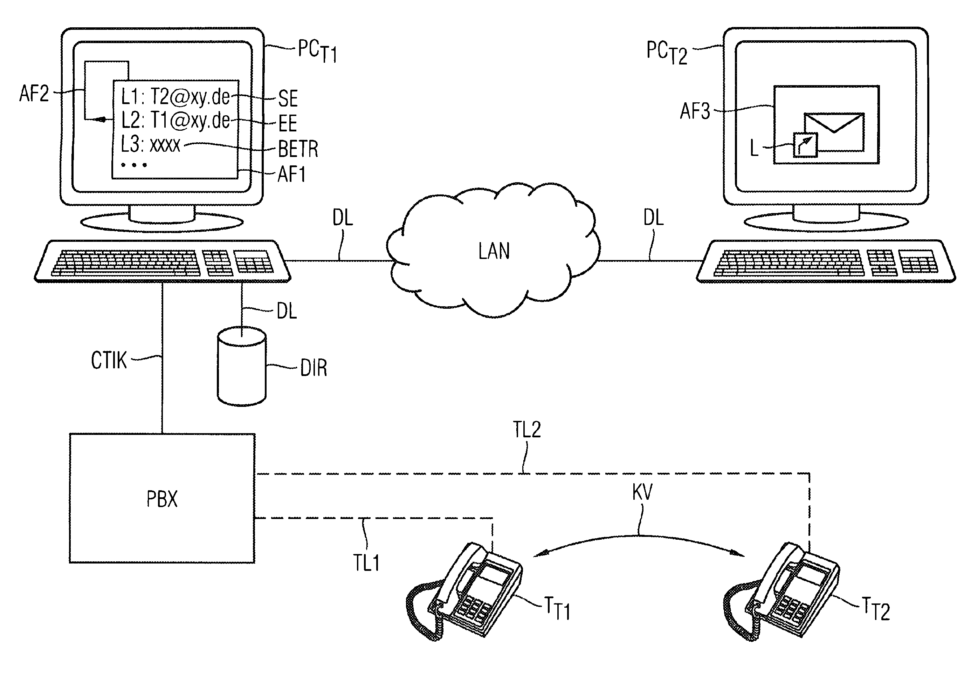

Die Zeichnung zeigt dabei in schematischer Darstellung in
- Figur 1: eine Kommunikationsanordnung zur Umsetzung des erfindungsgemäßen Verfahrens.

In Figur 1 ist in schematischer Darstellung ein Datenverarbeitungssystem, bestehend aus einem ersten Arbeitsplatzrechner PC_{T1}, einem zweiten Arbeitsplatzrechner PC_{T2} als erfindungsgemäße Rechnerendeinrichtung und einem lokalen Netzwerk LAN dargestellt. Darüber hinaus ist ein Kommunikationssystem umfassend einer Vermittlungsanlage PBX und zwei beispielhaft dargestellten Telefonendeinrichtungen - einer ersten Telefonendeinrichtung T_{T1} und einer zweiten Telefonendeinrichtung T_{T2} - als erfindungsgemäße Kommunikationsendeinrichtungen dargestellt. Das Kommunikationssystem sei dabei für Sprachübertragung ausgebildet.

Weiterhin besteht zwischen dem Kommunikationssystem und dem Datenverarbeitungssystem eine Kopplung, beispielhaft dargestellt durch die CTI-Kopplung CTIK zwischen der Vermittlungsanlage PBX und dem ersten Arbeitsplatzrechner PC_{T1}. Darüber hinaus ist in Figur 1 ein Directory Service DIR dargestellt, der eine Verbindung zum ersten Arbeitsplatzrechner PC_{T1} aufweist. Die Kopplung zwischen dem Directory Service und dem ersten Arbeitsplatzrechner PC_{T1} sowie die Verbindungsmöglichkeit zwischen dem ersten Arbeitsplatzrechner PC_{T1} über das lokale Netzwerk LAN zum zweiten Arbeitplatzrechner PC_{T2}, ist mittels Datenleitungen DL als durchgehende Linien veranschaulicht. Die CTI-Kopplung CTIK, die ebenfalls eine Datenverbindung darstellt, ist ebenfalls als durchgehende Linie veranschaulicht. Die Kopplung zwischen der erste Telefonendeinrichtung T_{T1} und der Vermittlungsanlage PBX sowie der zweiten Telefonendeinrichtung T_{T2} mit derselben Vermittlungsanlage PBX, ist durch gestrichelte Linien veranschaulicht und stellt im Gegensatz zu den Datenleitungen DL eine Verbindung basierend auf Sprachkommunikationsprotokollen dar.

Eine aufzubauende bzw. aufgebaute Kommunikationsverbindung KV ist in Figur 1 durch einen Doppelpfeil zwischen den beiden Telefonendeinrichtungen T_{T1} und T_{T2} angedeutet.

Es sei angenommen dass die Telefonendeinrichtung T_{T1} und der erste Arbeitsplatzrechner PC_{T1} im Wirkungsumfeld eines ersten Teilnehmers T1 angeordnet sind, so dass dieser beide Endgeräte bedienen kann. Analog gilt dies für die Telefonendeinrichtung T_{T2} und den zweiten Arbeitsplatzrechner PC_{T2} in Bezug auf den zweiten Teilnehmer T2.

Ausgangssituation für die nun folgenden Ausführungen sei, dass die beiden Telefonendeinrichtungen T_{T1} und T_{T2} sich jeweils in einem Ruhezustand befinden. Eine Kommunikationsverbindung KV besteht somit zu Beginn des im Folgenden erläuterten Verfahrens nicht. Darüber hinaus sei angenommen, dass bereits - zeitlich vorauslaufend - zwischen den beiden Teilnehmern T1 und T2 ein E-Mail-Austausch vorgenommen wurde. Auf diesem Austausch von E-Mails basierend sei angenommen, das an dem ersten Arbeitsplatzrechner PC_{T1} eine E-Mail-Anwendung geöffnet ist, in dessen Ausgabefenster AF1 eine E-Mail dargestellt ist.

Neben dem eigentlichen Inhalt der E-Mail seien darüber hinaus eine Sende-E-Mail-Adresse SE, eine Empfangs-E-Mail-Adresse EE und ein Betrefftext der E-Mail BETR in dem Ausgabefenster AF1 angezeigt. Die Sende-E-Mail-Adresse SE ist dabei in Figur 1 beispielhaft als T2@xy.de angegeben, wobei dies eine gültige E-Mail-Adresse des zweiten Teilnehmers T2 darstellen soll. Darüber hinaus ist die Empfangs-E-Mail-Adresse EE als T1@xy.de angegeben, wobei dies eine gültige E-Mail-Adresse des ersten Teilnehmers T1 darstellen soll. Der Betrefftext BETR ist in der Figur 1 lediglich als Zeichenkette XXXX angedeutet. Der E-Mail-Inhalt ist weiterhin lediglich durch Punkte angedeutet. Weitere Beschriftungstexte im E-Mail-Fenster sind darüber hinaus als Beschriftungen L1, L2 und L3 angedeutet.

Ein weiteres Ausgabefenster AF2 sei auf der Oberfläche des Arbeitsplatzrechners PC_{T1} dargestellt, wobei das erste Ausgabefenster AF1 im Vordergrund gegenüber dem zweiten Ausgabefenster AF2 angeordnet sein soll. Dies ist durch Überlappung der Ausgabefenster AF1 und AF2 in Figur 1 dargestellt, wobei das Ausgabefenster AF1 zumindest partiell das zweite Ausgabefenster AF2 überdeckt.

In Figur 1 ist darüber hinaus ein auf der Oberfläche des zweiten Arbeitsplatzrechners PC_{T2} dargestelltes Ausgabefenster AF3 angedeutet, das einen Link L als Verweis auf bzw. Verknüpfung zu einer E-Mail enthält. Genaueres zu diesen beiden Elementen der Figur 1 wird später erläutert.

Ausgangssituation sei, dass der Teilnehmer T1 eine E-Mail vom Teilnehmer T2 empfangen hat und basierend darauf eine telefonische Rücksprache mit dem Teilnehmer T2 durchführen möchte. Zu diesem Zweck greift er zu seiner Telefonendeinrichtung T_{T1} und wählt die Rufnummer der dem zweiten Teilnehmer zugeordneten Telefonendeinrichtung T_{T2}. Über die CTI-Kopplung CTIK wird dieser Vorgang von der Vermittlungsanlage PBX an den ersten Arbeitsplatzrechner PC_{T1} mitgeteilt. Ein Parameter der Übermittlung an den ersten Arbeitsplatzrechner PC_{T1} sei dabei die gewählte Rufnummer der zweiten Telefonendeinrichtung T_{T2}. Dieser Parameter wird einem residenten, auf dem ersten Arbeitsplatzrechner PC_{T1} ablaufendem Programm übergeben. Dieses Programm ermittelt nun durch Zugriff auf den Directory Service DIR einen Datensatz, der alle teilnehmerspezifischen Daten zu der übergebenen Rufnummer umfasst. Aus dem Teilnehmerdatensatz wird insbesondere die dem Teilnehmer zugeordnete E-Mail-Adresse extrahiert. Mit dieser extrahierten E-Mail-Adresse wird daraufhin im aktiven Fenster des Arbeitsplatzrechners PC_{T1}, d.h. im Ausgabefenster AF1 der geöffneten E-Mail, die Senderliste und die Empfängerliste durchsucht, ob hierbei eine übereinstimmung mit der gerade aus dem Directory Service ermittelten E-Mail-Adresse besteht.

Im vorliegenden Ausführungsbeispiel sei angenommen, dass die E-Mail-Adresse mit der Sende-E-Mail-Adresse SE im Ausgabefenster AF1 übereinstimmt. Folglich kann davon ausgegangen werden, dass der im Aufbau befindliche Rufaufbau zu einer Endeinrichtung aufgebaut wird die demselben Teilnehmer zugeordnet ist, der die E-Mail an den ersten Teilnehmer T1 geschickt hat. Daraufhin extrahiert das residente Programm aus Informationen der dargestellten E-Mail eine eindeutige Dokumenteninformation, mittels der ein eindeutiger Zugriff auf E-Mails in einem E-Mail-Postfach möglich ist - beispielsweise eine Kombination der Betreffzeile des Absendedatums der E-Mail und evtl. weitere der E-Mail zugeordnete Informationen. Auf diese Weise ermittelte eindeutige Dokumenteninformation wird daraufhin durch das residente Programm zumindest temporär gespeichert und vorgehalten.

Nimmt nun der zweite Teilnehmer T2 mittels der zweiten Telefonendeinrichtung T_{T2} die eingehende Kommunikationsverbindung KV an und geht somit die rufende Telefonverbindung in einen Gesprächszustand über, so kann die vorgehaltene Dokumenteninformation über Signalisierungen dieser Kommunikationsverbindungen KV oder durch eine parallel dazu bestehende Datenverbindung zwischen den beiden Arbeitsplatzrechnern PC_{T1} und PC_{T2} an den zweiten Arbeitsplatzrechner PC_{T2} übermittelt werden und hierbei insbesondere zu einem auf dem zweiten Arbeitsplatzrechner PC_{T2} ablaufenden residenten zweiten Programm.

Das residente zweite Programm kann nach Erhalt der Dokumenteninformation eine Suche in seinem E-Mail-Postfach durchführen, ob sich zu der angegebenen Dokumenteninformation ein zugehöriges Dokument finden lässt. Dies sollte im Prinzip zu einem Treffer führen, außer der zweite Teilnehmer hat die entsprechende E-Mail des vorausgehenden E-Mail-Verkehrs bereits an seinem Rechner gelöscht. Findet nun das zweite residente Programm eine derartige E-Mail mit derselben Dokumenteninformation in seinem E-Mail-Postfach, so kann ein drittes Ausgabefenster AF3 auf dem zweiten Arbeitsplatzrechner PC_{T2} geöffnet werden, indem ein Link L grafisch oder textuell angezeigt wird, mittels dem ein Zugriff auf das soeben gefundene Dokument ermöglicht wird. Für den zweiten Teilnehmer T2 ergibt sich somit die Möglichkeit, parallel zu bestehenden Kommunikationsverbindungen KV, über die Telefonendeinrichtungen T_{T1} und T_{T2} dieselbe E-Mail zu öffnen, die der erste Teilnehmer T1 bereits an seinem Bildschirm geöffnet hat. Dies ist durch einen einfachen Klick auf den angezeigten Link möglich.

Das Verfahren ermöglicht somit für den zweiten Teilnehmer T2 schnell und problemlos auf dasselbe Dokument zuzugreifen, das dem ersten Teilnehmer T1 vorliegt und das der erste Teilnehmer T1 gerade aktiv bearbeitet hat bzw. gerade aktiv anschaut. Eine langwierige manuelle Suche in einem Dokumentenordner ist nicht erforderlich. Dies ist schon deshalb besonders vorteilhaft, weil in bestehenden E-Mail-Systemen eine Suchfunktion häufig wenig komfortabel ist.

Verschiedene Varianten dieses Ablaufs sind darüber hinaus denkbar. Beispielsweise kann anstelle eines separaten Ausgabefensters AF3 die gefundene E-Mail als Link derart dargestellt werden, dass sie im Eingangspostfach als neueste eingegangene Nachricht angezeigt wird. Alternativ kann ohne Verwendung eines Links die E-Mail bzw. das anzuzeigende Dokument sofort durch das residente Programm des zweiten Arbeitsplatzrechners PC_{T2} auf dessen Bildschirm geöffnet werden, sofern es im Dokumentenspeicher identifiziert wurde. Vorzugsweise besitzen darüber hinaus beide E-Mail-Postfächer der beiden Arbeitsplatzrechner PC_{T1} und PC_{T2} eine gleichartige Indizierung der E-Mails, so dass ein ermittelter Index als Dokumenteninformation für das erste Dokument als eindeutiger Zugriffsschlüssel auf die E-Mails auf dem zweiten Arbeitsplatzrechner PC_{T2} verwendet werden kann und somit auf dem zweiten Arbeitsplatzrechner PC_{T2} ein insbesondere schneller Zugriff auf das E-Mail-Postfach möglich wird. Dies ist insbesondere dann möglich, wenn der Dokumentenspeicher immer durchwegs aktuell indiziert ist, und somit keine langwierige Suche im Dokumentenspeicher nötig wird.

Alternativ zur dargestellten Lösung mit einem Directory Service DIR kann auch auf einen derartigen Service verzichtet werden, wenn das E-Mail-Programm eine Art Adressbuch- oder Kontakte-Funktion umfasst, in der relevante Daten wie E-Mail-Adresse und Telefonnummern zu potentiellen Kommunikationspartnern abgespeichert sind. Dann ist lediglich ein Zugriff auf dieses Adressbuch bzw. die Kontakte ausreichend. Ähnlich kann vorgegangen werden, wenn die Firma ein zentrales Firmenadressbuch bereitstellt, in dem ebenfalls relevante Personendaten, wie Rufnummern und E-Mail-Adressen, gespeichert sind.

Da evtl. nicht jeder Teilnehmer diese Funktion ausnutzen möchte und keinen Automatismus bevorzugt der automatisch eine E-Mail auf seinem Arbeitsplatzrechner öffnet, kann vorgesehen sein, dass der zweite Teilnehmer aktiv diese Funktion sperren und/oder freigeben kann. Darüber hinaus kann vorgesehen sein, dass im Sinne von sog. Black- oder White-Listen ein Zugriff auf für bestimmte anrufende Teilnehmer gesperrt oder freigeschaltet werden.

Falls die Dokumenteninformation nicht eindeutig ist, kann das Verfahren trotzdem derart durchgeführt werden, dass falls mehrere Treffer auf dem Arbeitsplatzrechner PC_{T2} ermittelt werden, eine Liste dieser Treffer angezeigt wird und der zweite Teilnehmer aus der Liste einen Eintrag, vorzugsweise durch Anklicken, auswählen kann. Alternativ kann im Fall von mehreren Treffern auch eine automatische Rückfrage zum ersten Arbeitsplatzrechner PC_{T1} erfolgen, um ein zweites Kriterium für die Auswahl aus der Trefferliste bereitzustellen, mit dem Ziel, mittels diesem zweiten Kriterium eine eindeutige Auswahl durchzuführen.

Zusätzlich zur übermittelten Dokumenteninformation kann vorzugsweise auch die Position eines Cursors oder die Position von Markierungen innerhalb des ersten Dokumentes von ersten Arbeitsplatzrechner PC_{T1} an den zweiten Arbeitsplatzrechner PC_{T2} mit übertragen werden, so dass dem zweiten Teilnehmer T2 ebenso diese Markierungen oder die Position des Cursors angezeigt werden können. Vorzugsweise wird eine Art Positionsinformation mit übergeben und empfangsseitig ausgewertet. Dies ermöglicht es, dass der erste Teilnehmer T1 bereits einen relevanten Absatz markieren kann, wodurch bei längeren Dokumenten trotz des Umfangs des Dokuments leicht auf einen bestimmten Abschnitts des Dokuments verwiesen werden kann und der zweite Teilnehmer T2 nicht langwierig danach im zweiten Dokument suchen muss.

Selbst wenn die Kommunikationsverbindung KV nicht erfolgreich durchgeschaltet wurde und/oder der Anruf nicht durch den zweiten Teilnehmer T2 angenommen wurde, kann in einer Erweiterung des Verfahrens vorgesehen sein, die Dokumenteninformation trotz alledem an den Arbeitsplatzrechner PC_{T2} zu übermitteln um, im Rahmen einer erweiterten Anruferliste die übermittelte Dokumenteninformation derart auszuwerten, das in der Anruferliste neben der Information zu dem entgangenen Anruf auch eine Information zum betreffenden Dokument angezeigt wird - insbesondere ein Dateiname, eine Betreffzeile oder ein Link auf das Dokument. Somit kann für den zweiten Teilnehmer T2 bereits bei Betrachten der Anruferliste klar werden, um welches Thema es sich bei dem eingegangenen aber nicht beantworteten Anruf handelt.

Vorzugsweise werden in Ausgestaltungen der Verbindung alle Adressfelder einer E-Mail für die Ermittlung der Adressinformation ausgewertet, also die üblicherweise als "To", "CC", "From" und "BCC" bezeichneten Felder für Absender, Empfänger und weitere zu informierende Empfänger. Bei Verwendung von Verteilerlisten kann es dabei erforderlich sein, zuerst eine Auflösung der Verteiler-Bezeichnung in die tatsächliche Liste an E-Mail-Adressen vorzusehen.

In einer Ausgestaltung der Erfindung kann vorgesehen sein, automatisch das relevante geöffnete Dokument zu ermitteln. In einer dazu alternativen Ausgestaltung kann dagegen vorgesehen sein, dass der erste Teilnehmer explizit ein Dokument bestimmt, für das die Dokumenteninformation ermittelt werden soll.

Weiterhin kann der erfindungsgemäße Ablauf derart erfolgen, dass einzelne der Schritte direkt von Verfahrensstadien des Aufbaus der Kommunikationsverbindung abhängen. Beispielsweise kann das Abheben des Hörers als Auslöser verwendet werden, zu ermitteln, welches Dokument das aktive ist. Darüber hinaus kann dadurch getriggert werden, dass die erste Adressinformation und die erste Dokumenteninformation ermittelt werden. Darüber hinaus kann jeder weitere Zustand der Kommunikationsverbindung als Auslöser für zumindest einen der erfindungsgemäßen Verfahrensschritte ausgewertet werden.

Neben E-Mails, wie im vorliegenden Beispiel erläutert, kann das Verfahren auch analog für jegliche andere Art von Dokumenten eingesetzt werden. Beispielsweise kann in einer Software-Entwicklungsabteilung, in der alle Mitarbeiter auf eine zentrale Software-Ablage zugreifen, das Verfahren derart eingesetzt werden, dass ein erster Teilnehmer, der einen bestimmten Source-Code geöffnet hat und zu einer darin enthaltenen bestimmten Prozedur oder bestimmten Methode gescrollt ist, bei einem Anruf zu einem zweiten Teilnehmer ein das Dokument und die Position bestimmende Dokumenteninformation an den zweiten Teilnehmer übermittelt werden, so dass für diesen ebenfalls dieser Source-Code zur Betrachtung geöffnet werden kann. Somit besteht die einfache Möglichkeit direkt eine Diskussion über diese geöffnete Code-Stelle zu beginnen. Der Dokumentenspeicher wäre in diesem Falle kein E-Mail-Postfach, sondern eine Source-Code-Ablage auf einem zentralen Server.

In alternativen Ausgestaltungen kann der Dokumentenspeicher jedoch auch lediglich ein Datei-System auf dem zweiten Arbeitsplatzrechner PC_{T2} sein.

Weiterhin kann in alternativen Ausgestaltungen die Abfolge der einzelnen Verfahrensschritte zeitlich leicht variieren. So ist es zum Beispiel nicht erforderlich erst auf den Aufbau einer Kommunikationsverbindung KV zu warten, sondern es besteht die Möglichkeit, am Arbeitsplatzrechner PC_{T1} bereits mehrere der denkbaren Schritte, beispielsweise die Ermittlung einer Dokumenteninformation bereits im Ruhezustand der Telefonendeinrichtung T_{T1} durchzuführen.

Die Übermittlung der Dokumenteninformation erfolgt vorzugsweise in einem neuen bzw. optionalen Signalisierungselement einer Signalisierungsverbindung der Kommunikationsverbindung KV oder erfolgt in einer direkten oder über einen Server verlaufenden Datenverbindung zwischen den Arbeitsplatzrechnern PC_{T1} und PC_{T2}. Bezüglich der Datenverbindung kann dabei auf ein beliebiges Protokoll zurückgegriffen werden, das eine derartige Übertragung ermöglicht. Gegenüber einer Datenverbindung hat jedoch eine Übertragung über Signalisierungen der Kommunikationsverbindung KV den Vorteil, dass in einem Netzwerk vorhandene Sicherheitseinrichtungen wie Firewalls oder den Datenverkehr beeinflussende Proxy-Server, keinen negativen Einfluss aufweisen können, während im Datennetz theoretisch Konfigurationen möglich sein können, damit eine Übertragung vom ersten Arbeitsplatzrechner PC_{T1} zum zweiten Arbeitsplatzrechner PC_{T2} geblockt wird. Bei Verwendung einer Datenverbindung kann es somit erforderlich sein, eine entsprechende Netzwerkkonfiguration vorzusehen, damit eine Datenverbindung erfolgreich die Dokumenteninformation übertragen kann.

Während bisher weitgehend auf den erfolgreichen Fall eingegangen wurde, dass für die übermittelte Dokumenteninformation ein zweites Dokument ermittelbar ist, kann es vorkommen, dass der zweite Teilnehmer ein entsprechendes Dokument bereits gelöscht hat. Falls sich das Dokument noch in einem Papierkorb des zweiten Arbeitsplatzrechners PC_{T2} befindet, so besteht die Möglichkeit, dem zweiten Teilnehmer auch einen Zugriff auf das im Papierkorb befindliche Dokument zu ermöglichen. Falls überhaupt kein Dokument gefunden werden kann, für das die zweite Dokumenteninformation mit der ersten Dokumenteninformation übereinstimmt, so kann vorgesehen sein, dem zweiten Teilnehmer eine Ausgabe am Bildschirm des zweiten Arbeitsplatzrechners als negative Quittung des erfindungsgemäßen Verfahrens anzuzeigen.

Das Verfahren wurde anhand einer Übermittlung zwischen zwei Teilnehmern erläutert, bei dem die zwei Teilnehmer innerhalb einer Firma angeordnet und zu dieser zugehörig sind und an einer Vermittlungsanlage PBX gekoppelt sind. Dies ist jedoch nur ein Beispiel. Jegliche andere Art von Kommunikationsstrukturen und Kommunikationsverfahren sind denkbar und für das erfindungsgemäße Verfahren umsetzbar.

## Patentansprüche

1. Verfahren zum Betreiben einer Kommunikationsverbindung (KV) zwischen einer ersten Kommunikationsendeinrichtung (T_{T1}) und zumindest einer zweiten Kommunikationsendeinrichtung (T_{T2}), wobei eine Kopplung (CTIK) zu einem Datenverarbeitungssystem vorgesehen ist,
bei dem
- für mindestens ein an einer mit der ersten Kommunikationsendeinrichtung (T_{T1}) interagierenden ersten Rechnereinrichtung (PC_{T1}) geöffnetes erstes Dokument mindestens eine dem ersten Dokument zugeordnete jeweils einen Teilnehmer identifizierende erste Adressinformation (SE) ermittelt wird,
- eine das erste Dokument identifizierende Dokumenteninformation ermittelt wird, **dadurch gekennzeichnet, dass**
- bei Betreiben der Kommunikationsverbindung (KV) zwischen der ersten Kommunikationsendeinrichtung (T_{T1}) und einer zweiten Kommunikationsendeinrichtung (T_{T2}) die mindestens eine erste Adressinformation (SE) mit einer zu einer mit der zweiten Kommunikationsendeinrichtung (T_{T2}) interagierenden zweiten Rechnereinrichtung (PC_{T2}) zugeordneten zweiten Adressinformation auf Übereinstimmung geprüft wird,
- bei Übereinstimmung der ersten Adressinformation (SE) und der zweiten Adressinformation in einem Dokumentenspeicher der zweiten Rechnereinrichtung (PC_{T2}) mindestens ein zweites Dokument ermittelt wird, dem ebenfalls die Dokumenteninformation zugeordnet ist.

2. Verfahren nach einem der vorhergehenden Ansprüche,
**dadurch gekennzeichnet,**
**dass** die Dokumenteninformation von der ersten Rechnereinrichtung (PC_{T1}) und der zweiten Rechnereinrichtung (PC_{T2}) derart bestimmt wird, dass die Dokumenteninformation für alle Dokumente im Dokumentenspeicher eindeutig ist.

3. Verfahren nach einem der vorhergehenden Ansprüche,
**dadurch gekennzeichnet,**
**dass** durch die erste Rechnereinrichtung (PC_{T1}) und durch die zweite Rechnereinrichtung (PC_{T2}) für zwei identische Dokumente jeweils die gleiche Dokumenteninformation erzeugt wird.

4. Verfahren nach einem der vorhergehenden Ansprüche,
**dadurch gekennzeichnet,**
**dass** die Prüfung zu einem der folgenden Zeitpunkte erfolgt:
- bei Rufaufbau der Kommunikationsverbindung (KV),
- bei Etablierung der Kommunikationsverbindung (KV),
- bei Rufannahme der Kommunikationsverbindung (KV) durch die zweite Kommunikationsendeinrichtung (T_{T2}),
- bei durchgeschalteter Kommunikationsverbindung (KV) nach Bestätigung an der zweiten Kommunikationsendeinrichtung (T_{T2}),
- bei durchgeschalteter Kommunikationsverbindung (KV) nach Bestätigung an der zweiten Rechnereinrichtung (PC_{T2}).

5. Verfahren nach einem der vorhergehenden Ansprüche,
**dadurch gekennzeichnet,**
**dass** die Dokumenteninformation bei Öffnen eines Dokumentenfensters (AF1) ermittelt wird.

6. Verfahren nach einem der vorhergehenden Ansprüche,
**dadurch gekennzeichnet,**
**dass** die Ermittlung Dokumenteninformation zusammen mit der Prüfung, der Prüfung vorlaufend, erfolgt.

7. Verfahren nach einem der vorhergehenden Ansprüche,
**dadurch gekennzeichnet,**
**dass** die ermittelte Dokumenteninformation solange vorgehalten wird, bis die Prüfung erfolgt.

8. Verfahren nach einem der vorhergehenden Ansprüche,
**dadurch gekennzeichnet,**
**dass** die Kommunikationsverbindung (KV) eine Signalisierungsverbindung zwischen der ersten Kommunikationsendeinrichtung (T_{T1}) und der zweiten Kommunikationsendeinrichtung (T_{T2}) umfasst, und die Übermittlung der Dokumenteninformation im Rahmen der Signalisierungsverbindung erfolgt.

9. Verfahren nach einem der vorhergehenden Ansprüche,
**dadurch gekennzeichnet,**
**dass** zwischen der ersten Rechnereinrichtung (PC_{T1}) und der zweiten Rechnereinrichtung (PC_{T2}) eine Datenverbindung aufgebaut wird, und die Übermittlung der Dokumenteninformation im Rahmen der Datenverbindung erfolgt.

10. Verfahren nach einem der vorhergehenden Ansprüche,
**dadurch gekennzeichnet,**
**dass** das ermittelte zweite Dokument an der zweiten Rechnereinrichtung (PC_{T2}) angezeigt wird.

11. Verfahren nach einem der vorhergehenden Ansprüche,
**dadurch gekennzeichnet,**
**dass** für das ermittelte zweite Dokument an der zweiten Rechnereinrichtung (PC_{T2}) eine Verknüpfung (L) auf das zweite Dokument eingerichtet und angezeigt wird.

12. Verfahren nach einem der vorhergehenden Ansprüche,
**dadurch gekennzeichnet,**
**dass** es sich bei dem ersten Dokument um eine elektronische Nachricht oder um einen Anhang zu einer elektronischen Nachricht handelt.

13. Verfahren nach einem der vorhergehenden Ansprüche,
**dadurch gekennzeichnet,**
**dass** es sich bei dem Dokumentenspeicher um ein Email-Postfach oder um ein Email-Archiv handelt.

14. Verfahren nach einem der vorhergehenden Ansprüche,
**dadurch gekennzeichnet,**
**dass** durch die erste Rechnereinrichtung (PC_{T1}) das Ermitteln der Dokumenteninformation durch ein residentes erstes Programm durchgeführt wird.

15. Verfahren nach einem der vorhergehenden Ansprüche,
**dadurch gekennzeichnet,**
**dass** durch die zweite Rechnereinrichtung (PC_{T2}) das Ermitteln des zweiten Dokuments durch ein residentes zweites Programm durchgeführt wird.

16. Kommunikationssystem,
**gekennzeichnet durch**
Mittel zur Durchführung eines Verfahrens nach einem der vorhergehenden Verfahrensansprüche.

## Claims

1. Method for operating a communication connection (KV) between a first communication terminal (T_{T1}) and at least one second communication terminal (T_{T2}), wherein a link (CTIK) to a data processing system is provided, in which
- for at least one first document opened on a first computing unit (PC_{T1}) interacting with the first communication terminal (T_{T1}), at least one first address information (SE) identifying a subscriber and allocated to the first document is determined,
- a document information identifying the first document is determined, **characterised in that**
- on operation of the communication connection (KV) between the first communication terminal (T_{T1}) and a second communication terminal (T_{T2}), the at least one first address information (SE) is checked for correlation with a second address information allocated to a second computing unit (PC_{T2}) interacting with the second communication terminal (TT2),
- on correlation of the first address information (SE) and the second address information, in a document memory of the second computing unit (PC_{T2}) at least one second document is determined to which the document information is also allocated.

2. Method according to any of the preceding claims, **characterised in that** the document information is determined by the first computing unit (PC_{T1}) and the second computing unit (PC_{T2}) such that the document information is unique for all documents in the document memory.

3. Method according to any of the preceding claims, **characterised in that** the same document information is generated by the first computing unit (PCT1) and by the second computing unit (PC_{T2}) for two identical documents.

4. Method according to any of the preceding claims, **characterised in that** the check is performed at one of the following times:
- on creation of the call by the communication connection (KV),
- on establishing the communication connection (KV),
- on acceptance of the call of the communication connection (KV) by the second communication terminal (T_{T2}),
- on connection of the communication connection (KV), after confirmation at the second communication terminal (T_{T2}),
- on connection of the communication connection (KV), after confirmation at the second computing unit (PC_{T2}).

5. Method according to any of the preceding claims, **characterised in that** the document information is determined on opening of a document window (AF1).

6. Method according to any of the preceding claims, **characterised in that** the document information is determined together with the check or prior to the check.

7. Method according to any of the preceding claims, **characterised in that** the document information determined is reserved until the check is performed.

8. Method according to any of the preceding claims, **characterised in that** the communication connection (KV) comprises a signalling link between the first communication terminal (T_{T1}) and the second communication terminal (T_{T2}) and that the document information is transmitted in the context of the signalling connection.

9. Method according to any of the preceding claims, **characterised in that** a data connection is created between the first computing unit (PC_{T1}) and the second computing unit (PC_{T2}) and the document information is transmitted in the context of the data connection.

10. Method according to any of the preceding claims, **characterised in that** the second document determined is displayed on the second computing unit (PC_{T2}).

11. Method according to any of the preceding claims, **characterised in that** for the second document determined, a link (L) to the second document is created and displayed on the second computing unit (PC_{T2}).

12. Method according to any of the preceding claims, **characterised in that** the first document is an electronic message or an attachment to an electronic message.

13. Method according to any of the preceding claims, **characterised in that** the document memory is an e-mailbox or an e-mail archive.

14. Method according to any of the preceding claims, **characterised in that** the first computing unit (PC_{T1}) determines the document information through a resident first program.

15. Method according to any of the preceding claims, **characterised in that** the second computing unit (PC_{T2}) determines the second document through a resident second program.

16. Communication system **characterised by** means for implementation of a method according to any of the preceding method claims.

## Revendications

1. Procédé d'exploitation d'une liaison de communication (KV) entre une première installation de communication (T_{T1}) et au moins une deuxième installation de communication (T_{T2}), sachant qu'il est prévu un couplage (CTIK) à un système de traitement de données,
avec lequel
- pour au moins un premier document ouvert sur une première installation informatique (PC_{T1}) interagissant avec la première installation de communication (T_{T1}), il est déterminé au moins une première information d'adresse (SE) attribuée au premier document et identifiant à chaque fois un abonné,
- une information de document identifiant le premier document est déterminée,
**caractérisé en ce que**
- lors de l'exploitation de la liaison de communication (KV) entre la première installation de communication (T_{T1}) et une deuxième installation de communication (T_{T2}), il est vérifié si la ou les premières informations d'adresse (SE) correspondent à une deuxième information d'adresse attribuée à une deuxième installation informatique (PC_{T2}) interagissant avec la deuxième installation de communication (T_{T2}),
- en cas de correspondance de la première information d'adresse (SE) et de la deuxième information d'adresse dans une mémoire de documents de la deuxième installation informatique (PC_{T2}), il est déterminé au moins un deuxième document auquel l'information de document est également attribuée.

2. Procédé selon la revendication 1, **caractérisé en ce que**
l'information de document est déterminée par la première installation informatique (PC_{T1}) et par la deuxième installation informatique (PC_{T2}) de manière telle que l'information de document soit univoque pour tous les documents dans la mémoire de documents.

3. Procédé selon l'une quelconque des revendications précédentes, **caractérisé en ce que**,
la même information de document est générée à chaque fois par la première installation informatique (PC_{T1}) et par la deuxième installation informatique (PC_{T2}) pour deux documents identiques.

4. Procédé selon l'une quelconque des revendications précédentes, **caractérisé en ce que**,
la vérification a lieu à un des instants suivants :
- lors de l'établissement de l'appel pour la liaison de communication (KV),
- lors de l'établissement de la liaison de communication (KV),
- lors de l'acceptation de l'appel pour la liaison de communication (KV) par la deuxième installation de communication (T_{T2}),
- lorsque la liaison de communication (KV) est physiquement établie après confirmation par la deuxième installation de communication (T_{T2}),
- lorsque la liaison de communication (KV) est physiquement établie après confirmation par la deuxième installation informatique (PC_{T2}).

5. Procédé selon l'une quelconque des revendications précédentes, **caractérisé en ce que**,
l'information de document est déterminée lors de l'ouverture d'une fenêtre de document (AF1).

6. Procédé selon l'une quelconque des revendications précédentes, **caractérisé en ce que**,
la détermination de l'information de document a lieu conjointement avec la vérification, avant la vérification.

7. Procédé selon l'une quelconque des revendications précédentes, **caractérisé en ce que**,
l'information de document déterminée est retenue jusqu'à ce que la vérification ait lieu.

8. Procédé selon l'une quelconque des revendications précédentes, **caractérisé en ce que**,
la liaison de communication (KV) comporte une liaison de signalisation entre la première installation de communication (T_{T1}) et la deuxième installation de communication (T_{T2}), et la transmission de l'information de document a lieu dans le cadre de la liaison de signalisation.

9. Procédé selon l'une quelconque des revendications précédentes, **caractérisé en ce que**,
une liaison de données est établie entre la première installation informatique (PC_{T1}) et la deuxième installation informatique (PC_{T2}) et que la transmission de l'information de document a lieu dans le cadre de la liaison de données.

10. Procédé selon l'une quelconque des revendications précédentes, **caractérisé en ce que**,
le deuxième document déterminé est affiché sur la deuxième installation informatique (PC_{T2}).

11. Procédé selon l'une quelconque des revendications précédentes, **caractérisé en ce que**,
pour le deuxième document déterminé, un lien (L) est installé sur le deuxième document et affiché sur la deuxième installation informatique (PC_{T2}).

12. Procédé selon l'une quelconque des revendications précédentes, **caractérisé en ce que**,
quant au premier document, il s'agit d'un message électronique ou d'un document joint à un message électronique.

13. Procédé selon l'une quelconque des revendications précédentes, **caractérisé en ce que**,
quant à la mémoire de documents, il s'agit d'une boîte aux lettres de courrier électronique ou d'une archive de courrier électronique.

14. Procédé selon l'une quelconque des revendications précédentes, **caractérisé en ce que**,
la première installation informatique (PC_{T1}) effectue la détermination de l'information de document par le biais d'un premier programme résident.

15. Procédé selon l'une quelconque des revendications précédentes, **caractérisé en ce que**,
la deuxième installation informatique (PC_{T2}) effectue la détermination du deuxième document est effectuée par le biais d'un deuxième programme résident.

16. Système de communication,
**caractérisé par** des moyens permettant d'exécuter un procédé selon l'une quelconque des revendications précédentes.
